# EUROPEAN PATENT APPLICATION

(11) **EP 3 506 479 A1**
(43) Date of publication of application: **03.07.2019**
(21) Application number: 18203834.9
(22) Date of filing: 31.10.2018
(51) Int. Cl.: H02M 3/156, H02M 3/158, H02M 3/07, H02M 1/00

(54) **DIRECT CURRENT-DIRECT CURRENT CONVERTER**

(30) Priority: 26.12.2017 CN 201711437539
(71) Applicant: Silergy Semiconductor Technology (Hangzhou) Ltd, Hangzhou, Zhejiang 310012 (CN)
(72) Inventor: ZHAO, Chen, ZHEJIANG, 310012 (CN); ZHANG, Wang, ZHEJIANG, 310012 (CN)
(74) Representative: Ström & Gulliksson AB

(57) **Abstract**

A direct current-direct current converter is provided. In the direct current-direct current converter, a switched capacitor converter and a switch converter are cascaded. In view of the feature that the switched capacitor converter includes multiple switch groups, the switch converter is configured to share any one of the switch groups of the switched capacitor converter, which can effectively reduce the number of circuit components and increase utilization of the circuit components. In addition, the share of the switch group brings no negative effects on operation of the switched capacitor converter, thus the DC-DC converter achieves an adjustable smoothing output voltage and an adjustable gain.

## Description

### FIELD

The present disclosure relates to the field of power electronic technology, and in particular to a direct current-direct current (DC-DC) converter.

### BACKGROUND

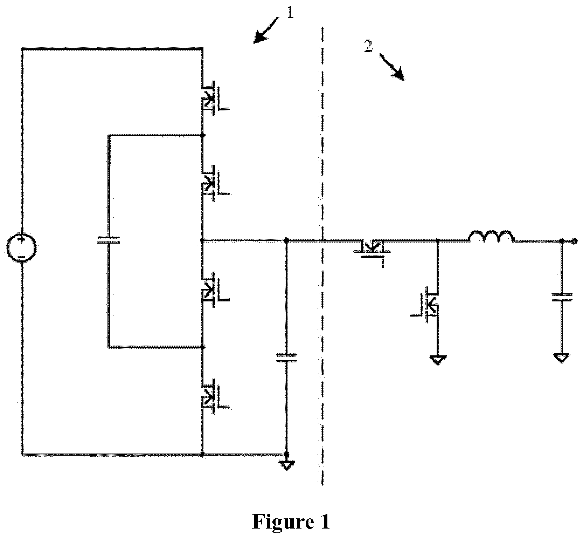

A switched capacitor converter performs voltage conversion or current conversion by controlling the charge/discharge of capacitors through switches. However, the switched capacitor converter only achieves voltage conversion with a constant transformation ratio. In addition, since there is high pulsation that is unexpected to be generated in the current of an input power supply and other devices, an obtained output voltage also has pulsation. In the conventional technology, in order to achieve a voltage conversion with a changeable transformation ratio between an input voltage and an output voltage and smooth the output voltage, a conventional switch converter is provided at a former stage or a later stage of the switched capacitor converter, which is coupled in series to the switched capacitor converter. As shown in Figure 1, a switched capacitor converter 1 is used as an input stage, and a switch converter 2 with a buck topology is used as an output stage. However, this may result in a large circuit scale.

### SUMMARY

In view of this, a DC-DC converter is provided according to an embodiment of the present disclosure to decrease a circuit scale and increase device utilization.

The DC-DC converter according to an embodiment of the present disclosure includes a switched capacitor converter and a switch converter.

The switched capacitor converter includes at least one switch group and at least one capacitor. Each switch group includes two switches coupled in series, and at least one capacitor is respectively coupled in parallel with corresponding one of the switch groups.

The switch converter includes a first magnetic component. The switch converter is configured to share one of the switch groups. The first magnetic component is coupled to an intermediate node of the shared switch group. The intermediate node is a common coupling point of two switches of the shared switch group.

In an embodiment, the switched capacitor converter is configured as an input stage, the switch converter is configured as an output stage; or the switch convert is configured as an input stage, the switched capacitor converter is configured as an output stage.

In an embodiment, the switch converter is configured to be capable of performing bidirectional power conversion, such that the DC-DC converter is capable of performing bidirectional DC-DC conversion.

In an embodiment, the DC-DC converter further includes a control circuit. The control circuit is configured to control the shared switch group in a pulse width modulation (PWM) manner, a pulse frequency modulation (PFM) manner or a combination of the PWM manner and the PFM manner, to adjust duty cycles of the two switches in the shared switch group, so as to adjust an output voltage of the DC-DC converter based on a voltage conversion of the switched capacitor converter.

In an embodiment, the switched capacitor converter is an isolated switched capacitor converter or a non-isolated switched capacitor converter. The switch converter is a boost converter, a buck converter or a boost-buck converter.

In an embodiment, the at least one switch group includes N switch groups. The at least one capacitor includes N-1 first capacitors and N-1 second capacitors, where N is greater than or equal to two. The N switch groups are sequentially coupled in series between two terminals of a first port. The N-1 first capacitors are respectively coupled in parallel with a second to a N-th switch groups. An i-th second capacitor is coupled between an intermediate node of an i-th switch group and an intermediate node of an (i+1)-th switch group. The first magnetic component is coupled between an intermediate node of the shared switch group and one terminal of a second port.

In an embodiment, the at least one switch group includes N first switch groups and one second switch group. The at least one capacitor includes N first capacitors, one second capacitor and N third capacitors, where N is greater than or equal to two. The N first switch groups are sequentially coupled in series between two terminals of a first port. The N first capacitors are respectively coupled in parallel with the N first switch groups. First terminals of the N third capacitors are coupled to an intermediate node of the second switch group, and second terminals of the N third capacitors are respectively coupled to intermediate nodes of the N first switch groups correspondingly. The second capacitor is coupled in parallel with the second switch group. The first magnetic component is coupled between the intermediate node of the second switch group and one terminal of a second port.

In an embodiment, the at least one capacitor further includes at least one isolated capacitor coupled between one terminal of the second port and any one of coupling terminals of the N first capacitors.

In an embodiment, the at least one switch group includes N first switch groups, one second switch group and one third switch group. The at least one capacitor includes N first capacitors, one second capacitor and N third capacitors, where N is greater than or equal to two. The N first switch groups are sequentially coupled in series between two terminals of a first port, the N first capacitors are respectively coupled in parallel with the N first switch groups. First terminals of the N third capacitors are coupled to an intermediate node of the third switch group, and second terminals of the N third capacitors are respectively coupled to intermediate nodes of the N first switch groups correspondingly. The second switch group is coupled to the third switch group in parallel. The second capacitor is coupled to the second switch group in parallel. One terminal of the first magnetic component is coupled to the intermediate node of the second switch group or the intermediate node of the third switch group, the other terminal of the first magnetic component is coupled to one terminal of a second port.

In an embodiment, the at least one capacitor further includes at least one isolated capacitor coupled between the intermediate node of the second switch group and any one of coupling terminals of the N first capacitors.

In an embodiment, the first port is an input port, the second port is an output port; or the first port is an output port, the second port is an input port.

According to the embodiments of the present disclosure, the switched capacitor converter and the switch converter are cascaded. In view of the feature that the switched capacitor converter includes multiple switch groups, the switch converter is configured to share one of the switch groups of the switched capacitor converter, which can effectively reduce the number of circuit components and increase utilization of the circuit components. In addition, the share of the switch group brings no negative effect on the operation of the switched capacitor converter, thus the DC-DC converter according to the embodiments of the present disclosure achieves an adjustable smoothing output voltage and an adjustable gain.

### BRIEF DESCRIPTION OF THE DRAWINGS

The above and other objects, features and advantages of the present disclosure are clearer by description of the embodiments of the present disclosure with reference to the drawings hereinafter.
Figure 1 is a circuit diagram of a DC-DC converter according to the conventional technology;
Figure 2 is a circuit diagram of a DC-DC converter according to a first embodiment of the present disclosure;
Figure 3 is a waveform diagram of switch control signals for PWM control according to the first embodiment of the present disclosure;
Figure 4 is a waveform diagram of switch control signals for another PWM control according to the first embodiment of the present disclosure;
Figure 5 is a waveform diagram of switch control signals for PFM control according to the first embodiment of the present disclosure;
Figure 6 is a circuit diagram of a variation of the DC-DC converter according to the first embodiment of the present disclosure;
Figure 7 is a circuit diagram of a DC-DC converter according to a second embodiment of the present disclosure;
Figure 8 is a circuit diagram of a DC-DC converter according to a third embodiment of the present disclosure; and
Figure 9 is a circuit diagram of a variation of the DC-DC converter according to the third embodiment of the present disclosure.

### DETAILED DESCRIPTION OF EMBODIMENTS

The present disclosure is described on the basis of the embodiments hereinafter, but the present disclosure is not limited to these embodiments. In the detailed description of the present disclosure hereinafter, numerous specific details are set forth. Those skilled in the art may understand the present disclosure without these specific details. To avoid obscuring the substance of the present disclosure, well-known methods, procedures, flows, elements and circuits are not described in detail.

In addition, those skilled in the art should understand that the drawings are provided herein for illustration, which are not drawn to scale.

In addition, it should be understood that in the following description, the term "circuit" indicates a conductive loop forming by at least one element or sub-circuit through electrical couplings or electromagnetic couplings. When referring to that an element or a circuit is "coupled to" another element or that an element or a circuit is "coupled between" two nodes, it may indicates that the element or the circuit is directly coupled or connected to another element or there is an intermediate element. The elements may be coupled in a physical manner, a logical manner, or a combination thereof. In addition, when referring to that an element is "directly coupled" or "directly coupled" to another element, it indicates that there is no intermediate element therebetween.

Unless otherwise stated, the terms "include", "comprise" or any other variations in the specification and claim are intended to be containing, rather than exclusive or exhaustive. That is, the terms indicate "including, but not limited to".

In the description of the present disclosure, it should be understood that the terms such as "the first" and "the second" herein are only used for description, rather than indicating or suggesting relative importance. Furthermore, in the description of the present disclosure, unless otherwise stated, the term "multiple" indicates two or more.

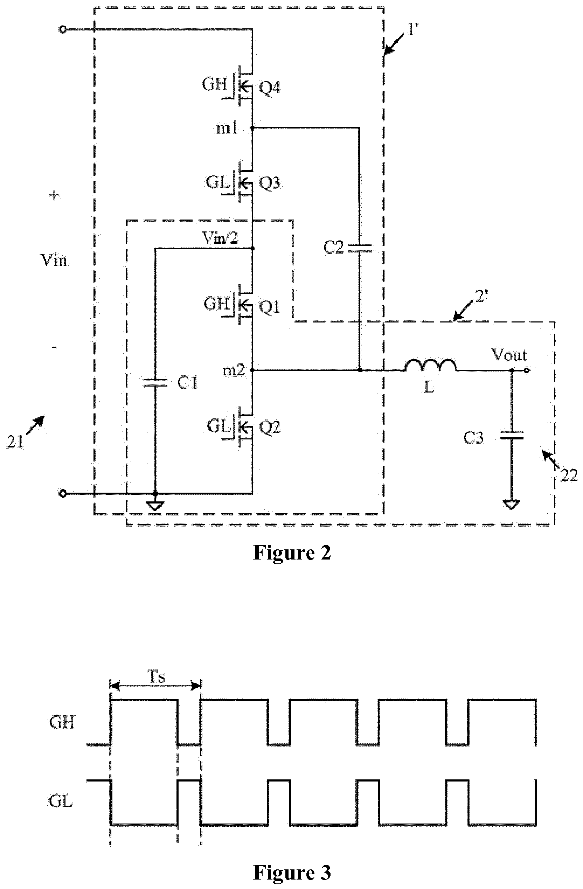

Figure 2 is a circuit diagram of a DC-DC converter according to a first embodiment of the present disclosure. As shown in Figure 2, the DC-DC converter according to the embodiment includes a non-isolated switched capacitor converter 1' and a switch converter 2'. The switch converter 2' shares a switch group in the switched capacitor converter 1'. The switched capacitor converter 1' includes two switch groups, that is, a switch group including switches Q1 and Q2 coupled in series and a switch group including switches Q3 and Q4 coupled in series. In each switch group, two switches are coupled in series. A common coupling point of the two switches is defined as an intermediate node mi of the switch group, where i=1, 2.

In the embodiment, the switches Q1 to Q4 are metal-oxide-semiconductor field effect transistors (MOSFET). In addition, other electronically controlled switch devices such as a bipolar junction transistor (BJT) and an insulated gate bipolar translator (IGBT) may also be used as the switches in the embodiment.

The switched capacitor converter 1' further includes capacitors C1 and C2. The capacitor C1 is coupled in parallel with the switch group including the switches Q1 and Q2. One terminal of the capacitor C2 is coupled to an intermediate node ml, and the other terminal of the capacitor C2 is coupled to an intermediate node m2.

The switch converter 2' includes an inductor L as a magnetic component and a capacitor C3 coupled between one terminal of the inductor and a ground. The other terminal of the inductor L is coupled to the intermediate node m2. In this case, the switches Q1 and Q2, the inductor L and the capacitor C3 together form the switch converter 2'. The switch group (including the switches Q1 and Q2) is shared by the switch converter 2' and the switched capacitor converter 1'.

In the switched capacitor converter 1', the switches Q1 and Q4 are controlled in response to a switch control signal GH, the switches Q2 and Q3 are controlled in response to a switch control signal GL. In the embodiment, description is made by taking a case that the switch control signal GH and switch control signal GL are mutually complementary as an example. That is, when the switch control signal GH has a high level, the switch control signal GL has a low level, and vice versa. The switches Q1 to Q4 are N-type MOSFETs. Therefore, in a case that the switch control signal GH has a high level and the switch control signal GL has a low level, the switches Q 1 and Q4 are switched on, and the switches Q2 and Q3 are switched off. In this case, a loop starting from an input port and passing through the switch Q4, the capacitor C2, the switch Q1 and the capacitor C1 is formed, and the capacitors C1 and C2 are charged with an input voltage. In a case that the switch control signal GL has a high level and the switch control signal GH has a low level, the switches Q1 and Q4 are switched off, and the switches Q2 and Q3 are switched on. In this case, a loop including the switch Q2, the capacitor C2, the switch Q3 and the capacitor C1 is formed, electric energy stored in the capacitors C1 and C2 is used to supply power, and a voltage of each of the capacitors is a half of the input voltage Vin. In this way, each of the capacitors is discharged/charged alternatively by repeatedly switching states of the switch groups, thereby achieving a substantial constant output.

It can be seen from the above description that, a ratio between an output voltage and an input voltage of the switched capacitor converter 1' is fixed and is independent from the duty cycle of the switch control signals GH or GL. An output voltage Vout of the switch converter 2' is determined based on a half of the input voltage Vin (Vin/2) and the duty cycle of the switch control signals of the two switches Q1 or Q2. Therefore, a control circuit (not shown in Figure 2) may be configured to adjust the duty cycles of the switch control signals GH and GL based on a desired output voltage, and maintain the switch control signals GH and GL complementary. The switched capacitor converter 1' may operate normally as long as the switch control signals GH and GL are mutually complementary. The switches Q1 and Q2 may be switched on/off alternatively by controlling the duty cycles of the switch control signals, such that the charging duration and the discharging duration of the inductor L and the capacitor C3 can be controlled for power conversion at a second stage. With the switch converter 2', voltage pulsation in the output of the switched capacitor converter 1' caused by charging/discharging of the capacitors and a power supply itself may be eliminated and a ratio between the output voltage and the input voltage may also be adjusted, thereby adjusting the gain of the whole DC-DC converter, to obtain an adjustable gain. In the embodiment, the gain of the switched capacitor converter 1' is 1/2, the switch converter 2' with a buck topology has a gain less than 1. A lower gain can be obtained with the switch converter 2'.

In one hand, the switches Q1 and Q2 of the shared switch group are used to switch the states of the circuit in the switched capacitor converter 1', to charge and discharge the capacitors C1 and C2. In the other hand, the switches Q1 and Q2 of the shared switch group are used as a main power switch and a synchronous rectification switch in the switch converter 2', to control a duration that the inductor L stores energy and a duration that the inductor L releases energy. As described above, since the gain of the switched capacitor converter 1' is independent from the duty cycles of the switch control signals for the switches Q1 and Q2, only the switch converter 2' is affected in a case that the duty cycles of the switch control signals are changed.

The control circuit may adjust the duty cycles of the switch control signals in various control manners, to adjust the state of the switch converter 2'. The control manners may include a pulse width modulation(PWM) manner, a pulse frequency modulation (PFM) manner or a combination of the PWM manner and the PFM manner.

Figure 3 is a waveform diagram of switch control signals for PWM control according to the first embodiment of the present disclosure. As shown in Figure 3, in each switch period Ts, the switch control signals GH and GL are mutually complementary. In a case that the switch period Ts is constant, the output voltage Vout may be adjusted by changing the duty cycle (for example, in a case that the switches are N-type MOSFETs, the duty cycle may be changed by changing duration of a high level in each switch period).

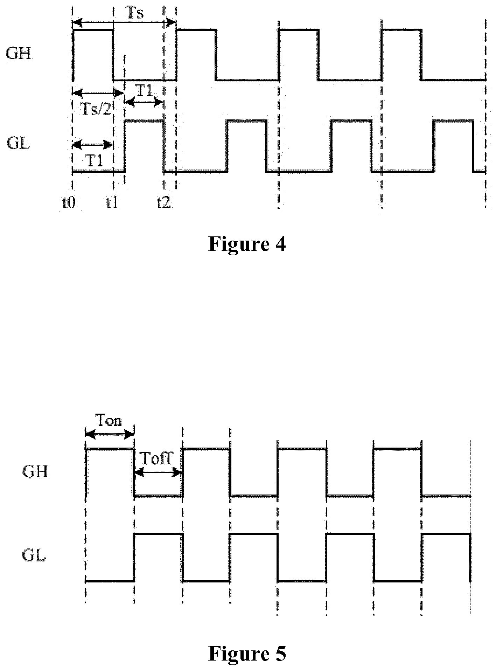

Figure 4 is a waveform diagram of switch control signals for another PWM control according to the first embodiment of the present disclosure. Different from that in Figure 3, the switch control signals GH and GL in Figure 4 are mutually symmetrical. This indicates that the switch control signals GH and GL have the same waveform and duty cycle, and different phases. For example, as shown in Figure 4, in a first switch period Ts, the switch control signal GH remains at a high level for a duration T1, which is started from time t0 to time t1, and the switch control signal GL remains at a high level for the duration T1, which is started from time Ts/2 to time t2. That is, the switch control signal GL lags the switch control signal GH by Ts/2, however, the switch control signals GL and GH have the same duty cycle. A dead time period may be inserted in the symmetrical signals when the switches of the switch groups switch. In the dead time period, the two switches of the switch group are both switched off to prevent the two switches from being both switched on during the switch. For the switch converter 2', power conversion may still be achieved by alternatively switching on/off the switches Q1 and Q2 in response to the switch control signals shown in Figure 4. By adjusting the duty cycle of the switch control signals, the gain is adjusted and a constant output voltage is achieved.

Figure 5 is a waveform diagram of switch control signals for PFM control according to the first embodiment of the present disclosure. As shown in Figure 5, for the switch control signals GH and GL, the switch period may not be constant, and a switched-on duration Ton or a switched-off duration Toff is constant. The output voltage of the switched capacitor converter 2' may also be adjusted by adjusting the switch period or changing the switch frequency.

According to the embodiments of the present disclosure, the switched capacitor converter and the switch converter are cascaded. In view of the feature that the switched capacitor converter includes multiple switch groups, the switch converter is configured to share one of the switch groups of the switched capacitor converter, which can effectively reduce the number of circuit components and increase utilization of the circuit components. In addition, the share of the switch group brings no negative effects on the operation of the switched capacitor converter, thus the DC-DC converter according to the embodiments of the present disclosure achieves an adjustable smoothing output voltage and an adjustable gain.

Further, the switched capacitor converter 1' may be used as an input stage of the DC-DC converter, and the switch converter 2' may be used as an output stage of the DC-DC converter. In this case, the switch converter 2' operates as a switch converter with a buck topology. In addition, the switch converter 2' may also be used as the input stage and the switched capacitor converter 1' may be used as the output stage. In this case, the switch converter 2' operates as a switch converter with a boost topology from a port 22 to a port 21.

Moreover, the switched capacitor converter 1' itself is capable of performing bidirectional DC-DC conversion, if the switch converter 2' is configured to be capable of performing bidirectional power conversion according to the embodiment of the present disclosure, the DC-DC converter may have the bidirectional power conversion function. That is, an input of the switched capacitor convertor 1' may be outputted to the switch converter 2' after being converted (buck conversion), and an input of the switch converter 2' may also be outputted to the switched capacitor converter 1' after being converted (boost conversion).

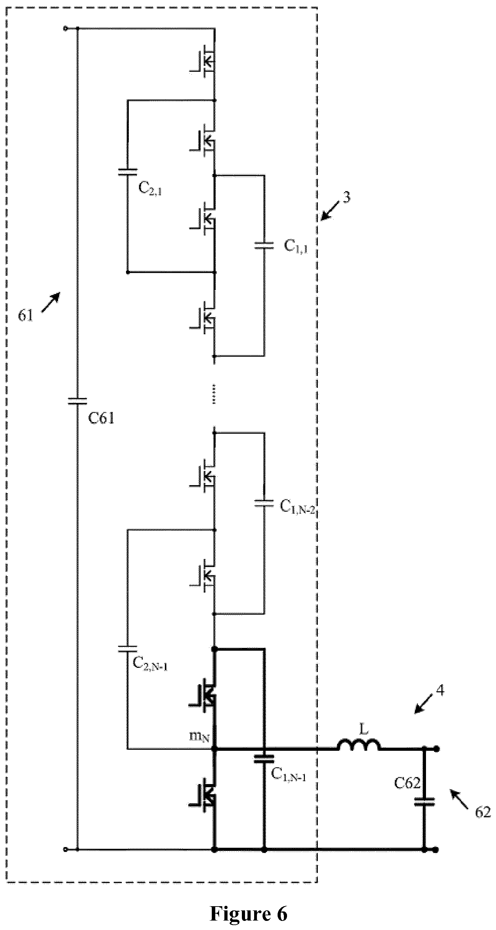

The number of the switch groups in the switched capacitor converter according to the first embodiment is not limited to two, which may be more than two switch groups based on a desired transformation ratio. Figure 6 is a circuit diagram of a variation of the DC-DC converter according to the first embodiment of the present disclosure. As shown in Figure 6, a switched capacitor converter 3 of the DC-DC converter includes N switch groups. Each of the switch groups includes two switches coupled in series. The N switch groups are coupled in series between two terminals of a port 61 in a sequence. The switched capacitor converter 3 further includes capacitors C_{1,1} to C_{1,N-1} and C_{2,1} to C_{2,N-1}. The capacitors C_{1,1} to C_{1,N-1} are respectively coupled to a second to a N-th switch groups in parallel. Each of the capacitors C_{2,1} to C_{2,N-1} is coupled between intermediate nodes of two adjacent switch groups. That is, the capacitor C_{2,i} is coupled between an intermediate node mi of an i-th switch group and an intermediate node mᵢ₊₁ of an (i+1)-th switch group, where i=1,2,...N. As shown in Figure 6, an N-th switch group is shared by a switch converter 4. An inductor L as a magnetic component is coupled between an intermediate node m_{N} of the N-th switch group (that is, a switch group closest to the ground) and one terminal of a port 62. Optionally, any one of the N switch groups may be shared by the switch converter 4 to perform power conversion.

Moreover, a capacitor C61 and a capacitor C62 may be respectively coupled in parallel at the port 61 and the port 62 to smooth an input/output voltage of the port.

Similar to the DC-DC converter shown in Figure 2, the above DC-DC converter may also perform bidirectional power conversion. In a buck conversion, the port 61 is used as an input port, and the port 62 is used as an output port. In a boost conversion, the port 61 is used as an output port, and the port 62 is used as an input port. In addition, a ratio between voltages of the port 61 and the port 62 may be greater if N is greater than two.

The switched capacitor converter may also be an isolated switched capacitor converter.

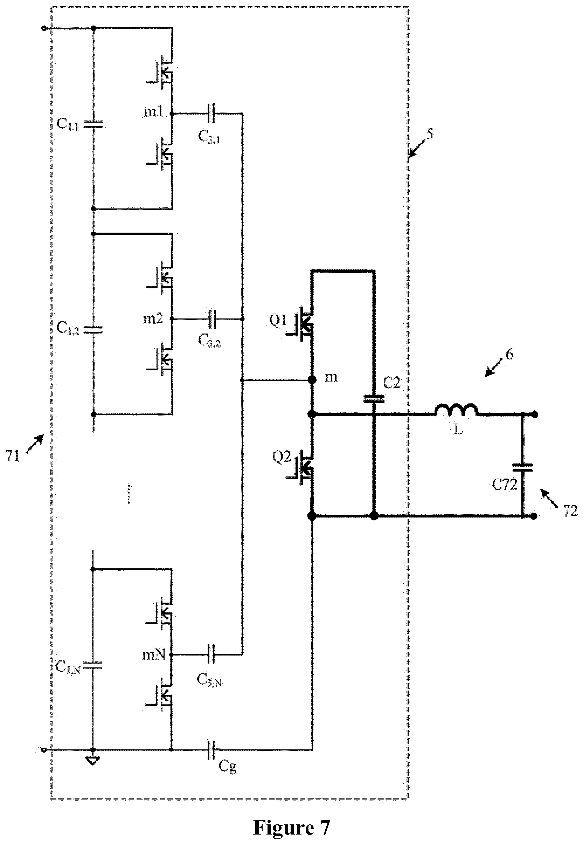

Figure 7 is a circuit diagram of a DC-DC converter according to a second embodiment of the present disclosure. As shown in Figure 7, the DC-DC converter according to the embodiment includes an isolated switched capacitor converter 5 and a switch converter 6. The switched capacitor converter 5 includes N first switch groups and one second switch group, where N is greater than or equal to two. Each of the switch groups includes two switches coupled in series. The N first switch groups are coupled in series between two terminals of a port 71 in a sequence. The switched capacitor converter 5 further includes capacitors C_{1,1} to C_{1,N}, one capacitor C2 and capacitors C_{3,1} to C_{3,N}. The capacitor C_{1,i} is coupled in parallel with an i-th first switch group, where i=1,2,...N. The capacitor C2 is coupled in parallel with the second switch group. The capacitor C_{3,i} is coupled between an intermediate node mi of an i-th first switch group and an intermediate node m of the second switch group. With the capacitors C_{3,1} to C_{3,N}, the port 71 and the port 72 can be isolated effectively by the switched capacitor converter 5, thereby effectively suppressing common mode noises at the input port. In the embodiment, the second switch group is shared by the switch converter 6. The second switch group includes the switches Q1 and Q2. An inductor L as a magnetic component is coupled between the intermediate node m of the second switch group and one terminal of the port 72. A capacitor C72 may be coupled in parallel with the port 72 to perform input filtering or output filtering. Optionally, an isolated capacitor Cg may further be provided. As shown in Figure 7, the isolated capacitor Cg is coupled between a grounded terminal of the port 71 and a grounded terminal of the port 72. Optionally, the isolated capacitor Cg may also be coupled between one terminal of the port 72 and any one of coupling terminals of the capacitors C_{1,1} to C_{1,N}.

Since both the switched capacitor converter 5 and the switch converter 6 according to the embodiment may perform bidirectional voltage conversion, the DC-DC converter according to the embodiment may perform bidirectional power conversion. In one way, the port 71 is used as an input port, and the port 72 is used as an output port. The switched capacitor converter 5 performs voltage conversion for a first stage in an isolated manner, and the switch converter 6 with a buck topology performs voltage conversion for a second stage, thereby converting a higher voltage inputted from the port 71 to a lower direct current (DC) voltage outputted from the port 72. In the other way, the port 72 is used as an input port, and the port 71 is used as an output port. The switch converter 6 is a switch converter with a boost topology from the port 72 to the port 71. The switch converter 6 performs the voltage conversion for the first stage, and the switched capacitor converter 5 performs the voltage conversion for the second stage, thereby converting a lower voltage inputted from the port 72 to a higher direct current voltage outputted from the port 71.

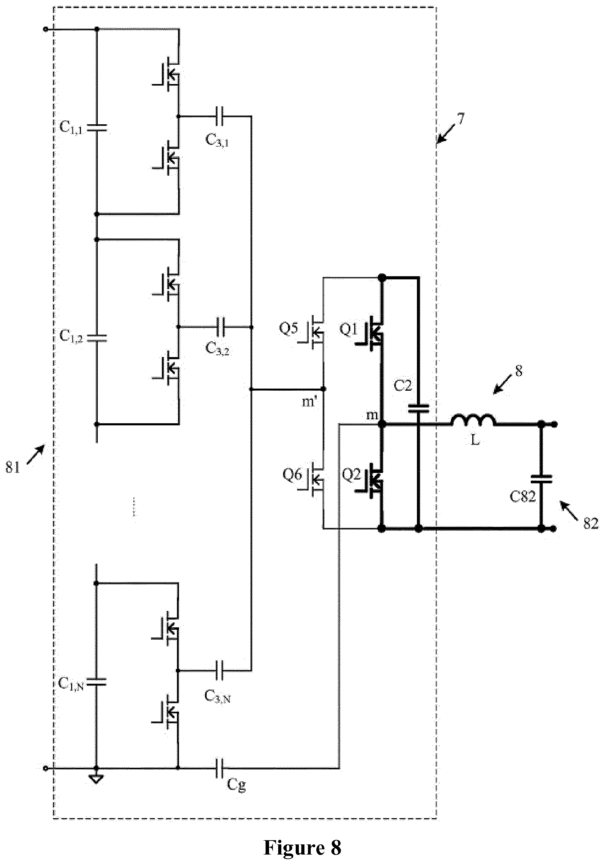

Figure 8 is a circuit diagram of a DC-DC converter according to a third embodiment of the present disclosure. As shown in Figure 8, the DC-DC converter according to the embodiment includes an isolated switched capacitor converter 7 and a switch converter 8 which are cascaded. The switched capacitor converter 7 has the same structure as the switched capacitor converter 5 shown in Figure 7 at a side of a port 81, which is not repeated herein. In the embodiment, the switched capacitor converter 7 is provided with two switch groups at a side near the switch converter 8, that is, a second switch group (including the switches Q1 and Q2) and a third switch group (including the switches Q5 and Q6). The second switch group and the third switch group are coupled with each other in parallel. The switch converter 8 shares one switch group of the switched capacitor converter 7 as a main switch and a synchronous rectification switch. In this embodiment, the capacitors C_{3,1} to C_{3,N} for isolation are coupled to an intermediate node m' of the third switch group. The inductor L of the switch converter 8 is coupled between one terminal of a port 82 and an intermediate node m of the second switch group. A capacitor C82 may further coupled in parallel with the port 82 to perform input filtering or output filtering. Preferably, an isolated capacitor Cg may be provided, one terminal of the isolated capacitor Cg is coupled to a grounded terminal of the port 81, and the other terminal of the isolated capacitor Cg is coupled to the intermediate node m of the second switch group. The inductor L of the switch converter 8 is coupled to the intermediate node m of the second switch group to share the switch group (including the switches Q1 and Q2).

In the embodiment, since the switched capacitor converter 7 and the switch converter 8 may perform bidirectional power conversion, the DC-DC converter according to the embodiment may perform directional power conversion. That is, the port 81 is used as an input port and the port 82 is used as an output port; or the port 82 is used as an input port and the port 81 is used as an output port.

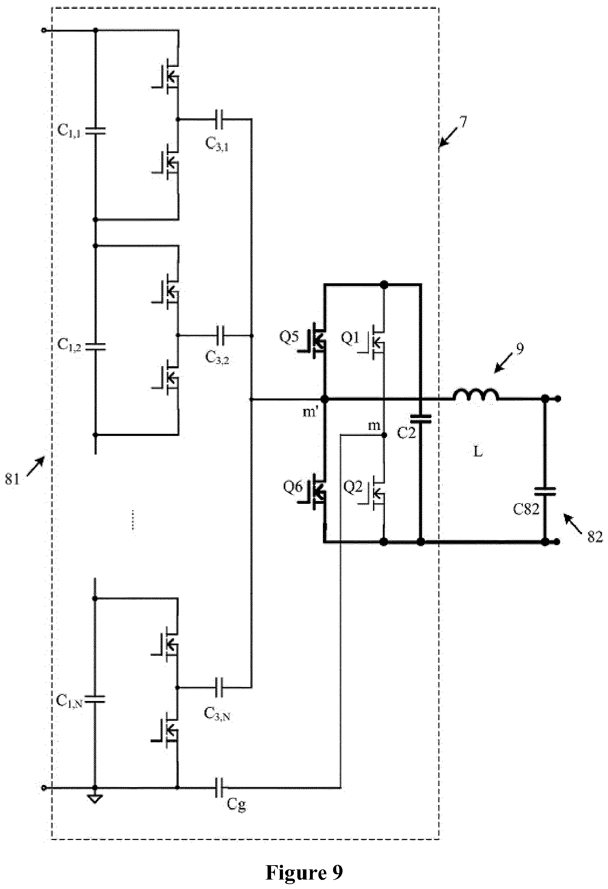

Figure 9 is a circuit diagram of a variation of the DC-DC converter shown in Figure 8. In the DC-DC converter shown in Figure 9, the inductor L of the switch converter 9 is coupled to the intermediate node m' of the third switch group of the switched capacitor converter 7 to share the switch group (including the switches Q5 and Q6), thereby achieving the same power conversion effect as that of the circuit shown in Figure 8.

It is to be understood that the switched capacitor converter according to the present disclosure may also be arranged in another equivalent structure including at least one switch group as described. In addition to the buck topology, the switch converter may also use various topologies such as a boost topology, a boost-buck topology and an LC resonant converter.

In the embodiments of the present disclosure, the switched capacitor converter and the switch converter are cascaded to perform power conversion. In view of the feature that the switches of each of the switch groups in the switched capacitor converter are switched on/off alternatively, at least one switch group may be shared as a main switch and a synchronous rectification switch of a switch converter, thereby effectively reducing the number of switches, thus improving utilization of devices.

In addition, a cascaded structure can also combine advantages of the switched capacitor converter and the switch converter, such that the gain of the DC-DC converter can be changed, and the output voltage can be effectively smoothed.

Moreover, since most switch converters may perform bidirectional power conversion, and the switched capacitor converter may perform bidirectional power conversion, the DC-DC converter according to the embodiments of the present disclosure can also achieve bidirectional power transmission.

It should be noted that the description above only shows the preferred embodiments, and is not intended to limit the present disclosure. For those skilled in the art, any modifications and changes may be made to the present disclosure. Any modifications, equivalent substitutions, improvements, and the like made within the spirit and principles of the present disclosure should fall within the protection scope of the present disclosure.

## Claims

1. A direct current-direct current, DC-DC, converter, comprising:
a switched capacitor converter comprising at least one switch group and at least one capacitor, wherein each switch group comprises two switches coupled in series, and at least one capacitor is respectively coupled in parallel with corresponding one of the switch groups; and
a switch converter comprising a first magnetic component, wherein the switch converter is configured to share one of the switch groups, the first magnetic component is coupled to an intermediate node of the shared switch group, the intermediate node is a common coupling point of two switches of the shared switch group.

2. The DC-DC converter according to claim 1, wherein
the switched capacitor converter is configured as an input stage, the switch converter is configured as an output stage; or
the switch convert is configured as an input stage, the switched capacitor converter is configured as an output stage.

3. The DC-DC converter according to claim 1, wherein the switch converter is configured to be capable of performing bidirectional power conversion, such that the DC-DC converter is capable of performing bidirectional DC-DC conversion.

4. The DC-DC converter according to claim 1, further comprising:
a control circuit configured to control the shared switch group in a pulse width modulation (PWM) manner, a pulse frequency modulation (PFM) manner or a combination of the PWM manner and the PFM manner to adjust duty cycles of the two switches in the shared switch group, in order to adjust an output voltage of the DC-DC converter based on a voltage conversion of the switched capacitor converter.

5. The DC-DC converter according to claim 4, wherein duty cycles of the two switches in each of other switch groups respectively correspond to the duty cycles of the two switches in the shared switch group.

6. The DC-DC converter according to claim 1, wherein the switched capacitor converter is an isolated switched capacitor converter or a non-isolated switched capacitor converter.

7. The DC-DC converter according to claim 1, wherein the at least one switch group comprises N switch groups, the at least one capacitor comprises N-1 first capacitors and N-1 second capacitors, N is greater than or equal to two, and wherein
the N switch groups are sequentially coupled in series between two terminals of a first port, the N-1 first capacitors are respectively coupled in parallel with a second to a N-th switch groups, an i-th second capacitor is coupled between an intermediate node of an i-th switch group and an intermediate node of an (i+1)-th switch group, and
the first magnetic component is coupled between an intermediate node of the shared switch group and one terminal of a second port.

8. The DC-DC converter according to claim 1, wherein the at least one switch group comprises N first switch groups and one second switch group, the at least one capacitor comprises N first capacitors, one second capacitor and N third capacitors, N is greater than or equal to two, and wherein
the N first switch groups are sequentially coupled in series between two terminals of a first port, the N first capacitors are respectively coupled in parallel with the N first switch groups, first terminals of the N third capacitors are coupled to an intermediate node of the second switch group, and second terminals of the N third capacitors are respectively coupled to intermediate nodes of the N first switch groups correspondingly, the second capacitor is coupled in parallel with the second switch group, and
the first magnetic component is coupled between the intermediate node of the second switch group and one terminal of a second port.

9. The DC-DC converter according to claim 8, wherein the at least one capacitors further comprises at least one isolated capacitor coupled between one terminal of the second port and any one of coupling terminals of the N first capacitors.

10. The DC-DC converter according to claim 1, wherein the at least one switch group comprises N first switch groups, one second switch group and one third switch group, the at least one capacitor comprises N first capacitors, one second capacitor and N third capacitors, N is greater than or equal to two, and wherein
the N first switch groups are sequentially coupled in series between two terminals of a first port, the N first capacitors are respectively coupled in parallel with the N first switch groups, first terminals of the N third capacitors are coupled to an intermediate node of the third switch group, and second terminals of the N third capacitors are respectively coupled to intermediate nodes of the N first switch groups correspondingly, the second switch group is coupled to the third switch group in parallel, the second capacitor is coupled to the second switch group in parallel, and
one terminal of the first magnetic component is coupled to an intermediate node of the second switch group or the intermediate node of the third switch group, another terminal of the first magnetic component is coupled to one terminal of a second port.

11. The DC-DC converter according to claim 10, wherein the at least one capacitor further comprises at least one isolated capacitor coupled between the intermediate node of the second switch group and any one of coupling terminals of the N first capacitors.

12. The DC-DC converter according to any one of claims 7 to 11, wherein
the first port is an input port, the second port is an output port; or
the first port is an output port, the second port is an input port.
